# EUROPÄISCHE PATENTSCHRIFT

(11) **EP 2 070 174 B1**
(45) Veröffentlichungstag und Bekanntmachung des Hinweises auf die Patenterteilung: **08.01.2014**
(21) Anmeldenummer: 07875183.1
(22) Anmeldetag: 09.10.2007
(51) Int. Cl.: H02J 3/38

(54) **KONDITIONIERUNGSEINRICHTUNG FÜR ENERGIEVERSORGUNGSNETZE**
CONDITIONING DEVICE FOR ENERGY SUPPLY NETWORKS
DISPOSITIF DE CONDITIONNEMENT POUR RÉSEAUX D'ALIMENTATION EN ÉNERGIE

(30) Priorität: 06.10.2006 DE 102006047792
(43) Veröffentlichungstag der Anmeldung: 17.06.2009
(73) Patentinhaber: Technische Universität Clausthal, 38678 Clausthal-Zellerfeld (DE)
(72) Erfinder: HESSE, Ralf, 38855 Wernigerode (DE); BECK, Hans-Peter, 38640 Goslar (DE); TURSCHNER, Dirk, 37539 Bad Grund (DE)
(74) Vertreter: Günther, Constantin
(86) Internationale Anmeldenummer: PCT/IB2007/004721
(87) Internationale Veröffentlichungsnummer: WO 2009/022198

(56) Entgegenhaltungen:
- DE-A1-102006 012 828
- US-A- 5 384 696
- US-A1- 2006 002 157

## Beschreibung

Die Erfindung betrifft eine Konditionierungseinrichtung für Energieversorgungsnetze mit einer an ein dreiphasiges Energieversorgungsnetz anschließbaren Netzspannungsmesseinheit, einer an die Netzspannungsmesseinheit angeschlossenen Recheneinheit zur Erzeugung von Konditionierstromwerten und einer mit dem Energieversorgungsnetz verbundenen Wechselrichtereinheit zur Einspeisung von Konditionierströmen in Abhängigkeit von den Konditionierstromwerten in das Energieversorgungsnetz.

Die im Zuge der Erschließung regenerativer Energiequellen zunehmende Zahl verteilt installierter Energieerzeuger im unteren und mittleren Leistungsbereich stellt bezüglich ihrer Integration in bestehende Energieversorgungsnetze wegen ihres fluktuierenden Leistungsangebots ein Problem dar. Entsprechend des stochastischen Charakters der eingespeisten Leistung ergeben sich zusammen mit den auf Kontinuität und Qualität ausgerichteten Forderungen an die Energieversorgung der Verbraucher Diskrepanzen, die Konditionierungsmaßnahmen an geeigneten Netzknoten erforderlich werden lassen. Insbesondere verringert sich mit zunehmender Dezentralisierung der Einspeisestruktur der Energieversorgungsnetze durch die Einbindung regenerativer Erzeuger der für die Netzstabilität sowie die Qualität der Elektroenergieversorgung für den Verbraucher bedeutsame Einfluss der Generatortechnik der traditionellen Großkraftwerke, die von der Synchronmaschine bestimmt wird. Infolge der Umverteilung der Erzeugung zu Gunsten regenerativer Quellen entsteht somit ein Defizit an schwingungsdämpfendem und stabilisierendem Einfluss der Synchronmaschinen. Weiterhin führt der verstärkte Einsatz nicht linearer Verbraucher zu Oberschwingungsbelastung in den Energieversorgungsnetzen, welche die Netzqualität beeinträchtigt und durch die thermische Wirkung in den Netzbetriebsmitteln zusätzlich Verlust und Alterung hervorrufen. Problematisch sind auch Pendeleffekte in Energieversorgungsnetzen mit verstärktem Einsatz elektrischer Maschinen, Spannungseinbrüche infolge zu geringer Kurzschlussleistung vor Ort und damit verbunden auch stärkere Auswirkung der hauptsächlich durch nicht lineare Lasten verursachten Netzoberschwingungen sowie die durch Schieflasten bedingte Netzunsymmetrie.

Aus J. Schmid, P. Strauß: "Elektrizität abseits der Stromnetze", in: Erneuerbare Energien 12/2003, Seiten 53 bis 55 ist ein Regelungsverfahren zur selbsttätigen Synchronisation von Stromrichtern unter Einsatz von frequenzvariablen Wechselrichtern beschrieben. Aufgrund der Abhängigkeit der frequenzrotierenden Generatoren von der Leistung können rotierende Generatoren problemlos parallel im Verbundnetz arbeiten. Der resultierende frequenzvariable Betrieb ermöglicht eine Synchronisation ohne zusätzliche Kommunikations- oder Synchronisationseinrichtungen. Stationär stellt sich eine gemeinsame Frequenz ein. Durch die Nutzung frequenzvariabler Wechselrichter kann die Leistungsabgabe abhängig von der Netzfrequenz begrenzt werden. Eine ständige Stromversorgung und Netzstabilität wird durch Kombination von Batteriewechselrichtern und Batteriespeichern sichergestellt.

Hauck, M.: "Bildung eines drei-phasigen Inselnetzes durch unabhängige Wechselrichter im Parallelbetrieb", Dissertation Universität Karlsruhe 2002, offenbart ein Regelungskonzept für einen selbstgeführten Stromrichter, der ein elektrisches Netz mit Energie versorgt und im Verbund mit anderen Spannungsquellen betrieben werden kann. Es wird gezeigt, dass ein Parallelbetrieb eines Batteriewechselrichters mit einer geregelten Synchronmaschine ohne Kommunikation möglich ist und hierdurch die Spannungsqualität verbessert werden kann.

In Beck, H.-P., Clemens, M.: "Konditionierung elektrischer Energien in dezentralen Netzabschnitten", in: etz, Heft 5/2004, Seiten 16 bis 25, ist ein Energiekonditionierer für ein Energieversorgungsnetz beschrieben, der eine Batterie und einen Stromrichter zur Netzanbindung aufweist. Der Energiekonditionierer ist eine Drehspannungsquelle, deren Grundschwingung nach Höhe und Phasenlage verstellt werden kann.

Wenske, J.: "Elektronische Synchronmaschine mit aktivem Dämpferkreis zur Energiekonditionierung in elektrischen Versorgungssystem", Dissertation TU Clausthal 1999, beschreibt die Energiekonditionierung von Energieversorgungsnetzen mit Hilfe einer elektronischen Synchronmaschine mit einem aktiven Dämpferkreis. Mit Hilfe von leistungselektronischen Bauelementen werden die Primärseite, Sekundärseite und Tertiärseite (aktiver Dämpferkreis) einer Synchronmaschine nachgebildet, um Wirk- und Blindleistung am Netz vorzugeben und regeln zu können. Der zustandsgeregelte Spannungs- und Leistungsregler in Gestalt eines Netzstützpunktes verhält sich allerdings dynamisch nicht wie eine elektromechanische Synchronmaschine. Lediglich die Möglichkeit der Sollwertvorgabe am Wirk- und Blindleistungsregler führt zum Vier-Quadranten-Wirk/Blindleistungsbetrieb, welcher mit dem statischen Verhalten einer elektromechanischen Synchronmaschine im weiteren Sinne vergleichbar ist. Hierzu wird die Synchronmaschine mit einer einfachsten Ersatzschaltung bestehend aus spannungs- und frequenzsteuerbarer Spannungsquelle, Koppelreaktanz und angeschalteten Netz nachgebildet. Ein Leistungsfernabruf durch das Energieversorgungsnetz wird nicht unterstützt, so dass die zu einem Zeitpunkt benötigten Leistungen als lokale Sollwerte gegebenen falls über eine separate Kommunikationsverbindung vorgegeben werden müssen. Ein Pulswechselrichter bildet zusammen mit einer Glättungsinduktivität und einer im Dreieck geschalteten Sekundärwicklung die Läuferseite der elektronischen Synchronmaschine. Eine oberspannungsseitige Primärwicklung mit herausgeführtem Sternpunkt und einer Kondensatorbank bildet die Primärseite bzw. den Stator der Synchronmaschine. Der aktive Dämpferkreis der Synchronmaschine wird durch eine ebenfalls im Dreieck geschaltete Tertiärwicklung in Verbindung mit einer Filterinduktivität und einem hochtaktenden Umrichter gebildet.

DE 10 2006 012 828 A1 offenbart ein Verfahren zur Steuerung eines Frequenzkonverters, der zwischen einen Synchrongenerator und ein Energieversorgungsnetz geschaltet ist. Bei einem üblicherweise direkt mit dem Netz verbundenen Generator ist ein mechanisches Getriebe erforderlich, da die optimale Geschwindigkeit der Turbine normalerweise nicht die gleiche ist wie jene des Generators. Zudem ist die optimale Geschwindigkeit der Turbine abhängig von der anliegenden Last und die optimale Effizienz bei unterschiedlicher Last kann nur gewährleistet werden, wenn die Turbine bei unterschiedlichen Geschwindigkeiten betrieben werden kann. Dies ist bei einer starren Anordnung nicht möglich. Daher wird vorgeschlagen, eine in einem Generator erzeugte Wechselspannung mit einer ersten Frequenz zunächst nach einem geschalteten Gleichrichter gleichzurichten und die so in einem Zwischenkreis vorhandene Gleichspannung in einem geschalteten Wechselrichter in Wechselspannung mit einer Netzfrequenz zu wandeln. Im Wesentlichen wird der Wechselrichter in Abhängigkeit von der Gleichspannung im Zwischenkreis geregelt. Dabei soll eine Strategie der Regelung verwendet werden, welche dem Frequenzkonverter ähnliche Eigenschaften verleiht, wie einem Synchrongenerator. Die Steuerungssignale für den Gleichrichter werden auf Basis eines fest vorgegebenen Werts der Generatorfrequenz nach Einstellung der Phasenverschiebung erzeugt. Zudem wird die Erregerspannung des realen Synchrongenerators eingestellt. Das Steuersignal für den Wechselrichter wird aus der Differenz der Spannung über der Kapazität und einem Referenzwert bestimmt, die mit einer Kontrollverstärkung multipliziert wird.

Ausgehend hiervon ist es Aufgabe der vorliegenden Erfindung eine verbesserte Konditionierungseinrichtung für Energieversorgungsnetze zu schaffen, die das vollständige dynamische und statische Verhalten einer elektromechanischen Synchronmaschine durch deren Nachbildung am Netz wirksam werden lässt.

Die Aufgabe wird mit der Konditionierungseinrichtung mit den Merkmalen des Anspruchs 1 gelöst.

Durch die rechnergestützte Nachbildung einer Synchronmaschine und die Netzeinspeisung der auf dieser Grundlage errechneten Synchronmaschinenströme mit leistungselektronischen Einrichtungen ist es möglich, diese zur zielgerichteten Konditionierung frei zu parametrisieren und im Ergebnis eine verbesserte Netzsituation herbeizuführen, wenn Konditionierströme in Abhängigkeit von den ermittelten Konditionierstromwerten in das Energieversorgungsnetz eingespeist werden.

Durch die Nachbildung der Synchronmaschine mit Hilfe der Recheneinheit können sowohl dynamische als auch statische Eigenschaften der klassischen elektromechanischen Synchronmaschine am Netz wirksam gemacht werden. Anhand von Nachbildungs- und Kompensationsalgorithmen bestimmt die Recheneinheit ein Konditionierstromwertsignal. Die Konditionierstromwerte können dann beispielsweise über den hochdynamischen Kompensationswechselrichter durch Einprägung der errechneten Konditionierströme dem Energieversorgungsnetz zugeführt werden. Die Konditionierstromwerte bestehen mindestens aus den errechneten Statorströmen der nachgebildeten Synchronmaschine und können optional auch die von der Recheneinheit zusätzlich bestimmte Oberschwingungs- und Unsymmetrie-Kompensationsstromwerte beinhalten.

Die modellierte Nachbildung der Synchronmaschine hat den Vorteil der freien Festlegung der Parameter der Synchronmaschinennachbildung, so dass das Verhalten der Synchronmaschinen z. B. hinsichtlich Dämpfung und Reaktion nach transienten Vorgängen der jeweiligen Beschaffenheit des angekoppelten Energieversorgungsnetzes bzw. des Verhaltens der Lasten im Energieversorgungsnetz angepasst werden kann.

Die Konditionierung kann ohne weitere Kommunikationsverbindung einfach dadurch erfolgen, dass die Netzspannung des Energieversorgungsnetzes gemessen wird und als Eingangsgröße für die Simulation der Synchronmaschine genutzt wird. Wie bei einer real rotierenden, schlupffreien Synchronmaschine wird bei der Simulation angenommen, dass die simulierte Drehzahl der rechentechnisch nachgebildeten

Synchronmaschine in einem statisch starren Verhältnis zur Netzfrequenz steht, jedoch mit dem nachgebildeten Rotor entsprechende Pendelungen ausführen kann.

Vorzugsweise ist die Recheneinheit zur Nachbildung der Synchronmaschine mit Hilfe eines linearen Differentialgleichungssystems mit frei parametrisierbarer Matrix zur Beschreibung der Impedanzen der Maschine, der Flusskopplung zwischen Stator, Erreger und Dämpfer sowie der typischen Zeitkonstanten der nachgebildeten Synchronmaschine eingerichtet. Die elektrischen Eigenschaften der Synchronmaschine werden somit durch die Linearfaktoren der Differentialgleichung vorgegeben, die zur Ermittlung von Statorströmen für die Netzeinspeisung in Abhängigkeit von den gemessenen Netzspannungen genutzt werden.

Die echtzeitige Berechnung des Synchronmaschinenmodells auf der Recheneinheit führt auch zum Wirksamwerden einer rotierenden Masse am Netz, da das beschreibende Differentialgleichungssystem auch die exakte Nachbildung des mechanischen Verhaltens einer Synchronmaschine berücksichtigt, deren berechnete elektrische Auswirkungen direkt am Netz wirksam werden. Der Gleichspannungsspeicher des Wechselrichters korrespondiert dabei energetisch mit dem nachgebildeten, virtuellen mechanischen System. Oszillierende und statische mechanische Energie des Rotors einer elektromechanischen Synchronmaschine entsprechen oszillierender und statischer elektrischer Energie am Gleichspannungsspeicher der virtuellen Synchronmaschine.

Wird bei einer elektromechanischen Synchronmaschine die Welle mit einem motorischen bzw. generatorischen Moment beaufschlagt und entsprechend Wirkleistung am Netz aufgenommen bzw. abgegeben, kann bei der erfindungsgemäßen Nachbildung der Synchronmaschine ein virtuelles Moment an der Recheneinheit vorgegeben werden, wodurch im Falle eines motorischen Momentes Wirkleistung vom Netz aufgenommen und dem Gleichspannungsspeicher des Wechselrichters zugeführt, im Falles eines generatorischen Momentes hingegen dem Gleichspannungsspeicher Wirkleistung entnommen und dem Netz zugeführt wird.

Wie bei einer elektromechanischen Synchronmaschine kann auch beim beschriebenen Konzept Wirk- und Blindleistung durch das Netz fernabgerufen werden. Verändert das Netz hierzu dynamisch seine Frequenz, wird Wirkleistung, verändert das Netz die Spannung, wird Blindleistung abgerufen. Zusammen mit einer beliebigen Gleichspannungsquelle am Gleichspannungsspeicher verhält sich die Synchronmaschinennachbildung mit dem Wechselrichter am Netz wie ein konventionelles Kraftwerk, was die Netzintegration und den Betrieb am Netz vereinfacht.

Die Erfindung ermöglicht es insbesondere verteilt installierten, regenerativen Erzeugern kleiner und mittlerer Leistung, am Netz wie konventionelle Kraftwerke zu agieren, das Netz gleichzeitig zu stabilisieren und die Netzqualität zusätzlich durch Oberschwingungs- und Unsymmetriekompensation zu verbessern. Aus Netzsicht erscheinen die auf diese Weise eingebundenen Erzeuger wie Synchronmaschinen, so dass bewährter und sicherer Netzbetrieb möglich ist.

Durch die vollständige Nachbildung einer konventionellen elektromechanischen Synchronmaschine wird auch die Masseträgheit ihrer Läufer berücksichtigt, so dass die aus der Wirkung der virtuellen rotierenden Masse hervorgehenden Eigenschaften für das Energieversorgungsnetz bereitgestellt werden können.

Das identische dynamische Verhalten einer elektromechanischen Synchronmaschine und der Maschinennachbildung hat weiterhin den Vorteil, dass anfallende Dämpferleistung, z. B. infolge von unerwünschten Netzpendelungen, nicht mehr wie im Falle elektromechanischer Synchronmaschinen im Dämpferkreis in nicht nutzbare Wärme umgewandelt wird, sondern beim erfindungsgemäßen Konzept dem Gleichspannungsspeicher des Wechselrichters zugeführt wird. Die energetische Substanz der netzbeeinträchtigenden Pendelung wird damit dem Netz entzogen und kann durch Speicherung wieder nutzbar gemacht werden.

Die Recheneinheit ist vorzugsweise weiterhin zur Ermittlung von Netzspannungsoberschwingungen der gemessenen Spannung und zur Generierung von Oberschwingungs-Konditionierstromwerten zur Kompensation der ermittelten Netzspannungsoberschwingungen bei Rückspeisung von den Oberschwingungs-Konditionierstromwerten entsprechenden Anteilen der Konditionierströme in das Energieversorgungsnetz eingerichtet.

In entsprechender Weise ist die Recheneinheit auch zur Ermittlung von Netzspannungsunsymmetrien der gemessenen Netzspannung und zur Generierung von Unsymmetrie-Konditionierstromwerten zur Kompensation der ermittelten Netzspannungsunsymmetrien bei Rückspeisung von den Unsymmetrie-Konditionierstrom-werten entsprechenden Anteilen der Konditionierströme in das Energieversorgungsnetz eingerichtet.

Durch diese zusätzliche Oberschwingungs- und Unsymmetriekompensation kann die Netzqualität des Energieversorgungsnetzes weiter verbessert werden. Insbesondere können Oberschwingungen des Drei-Phasen-Netzes sowie Unsymmetrien der drei Phasen des Energieversorgungsnetzes ausgeglichen werden. Dies ist möglich, da die errechneten Statorströme der Synchronmaschinennachbildung mit den Kompensationsströmen zur Oberschwingungs- und Unsymmetriekompensation zu einem gemeinsamen Konditionierstrom superpositionierbar sind.

Vorzugsweise ist eine Gleichspannungsquelle vorgesehen, die mit einem Wechselrichter verbunden und über eine Koppelinduktivität oder einen Koppeltransformator an das Energieversorgungsnetz angeschlossen ist. Damit ist ein Vier-Quadranten-Leistungsbetrieb möglich. Der Wechselrichter wird durch die Konditionierstromwerte angesteuert, um eine Energiekonditionierung einschließlich einer Oberschwingungs- und Unsymmetriekompensation im Energieversorgungsnetz durchzuführen.

Durch die Konditionierungseinrichtung kann die Schwingungsneigung vermindert und die Kurschlussleistung elektrischer Energieversorgungsnetze erhöht werden. Mit Hilfe der nachgebildeten rotierenden Massen kann eine weitere Stabilisierung des Energieversorgungsnetzes erreicht werden.

Durch das Zusammenwirken mehrerer Regelungseinrichtungen mit simulierter Synchronmaschine im verteilten Netzbetrieb kann die Betriebssicherheit durch

Schwingungsdämpfung und Erhöhung der Kurzschlussleistung netzweit verbessert werden.

Die Erfindung wird nachfolgend beispielhaft anhand der beigefügten Zeichnungen näher erläutert. Es zeigen
- Fig. 1 -: Blockdiagramm einer Konditionierungseinrichtung für Energieversorgungsnetze;
- Fig. 2 -: Skizze des Wirkungs- und damit geschützten Netzbereichs der angeschlossenen Konditionierungseinrichtung und Netzspannungs- und Konditionierstromverläufen;
- Fig. 3 -: Diagramm des Detailaufbaus einer Ausführungsform der Konditionierungseinrichtung mit den Komponenten zur Nachbildung der Synchronmaschine und zur Oberschwingungs- und Unsymmetriekompensation;
- Fig. 4 -: Blockdiagramm der Funktionseinheiten zur Nachbildung der Synchronmaschine;
- Fig. 5 -: Blockdiagramm der Funktionseinheit zur Kompensation von Oberschwingungen;
- Fig. 6 -: Blockdiagramm der Funktionseinheit zur Kompensation von Unsymmetrien.

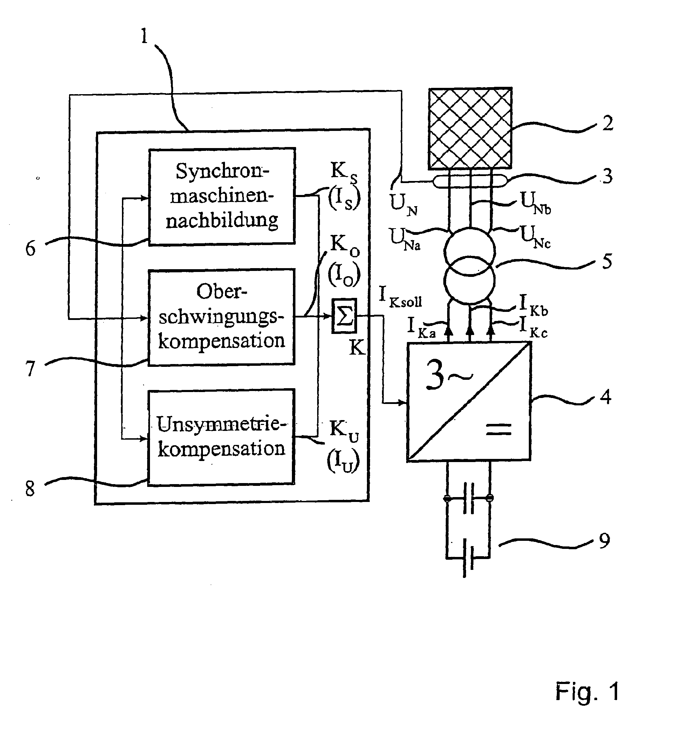

Figur 1 lässt ein Blockdiagramm der erfindungsgemäßen Konditionierungseinrichtung für Energieversorgungsnetze 2 erkennen. Mit Hilfe einer Netzspannungsmesseinheit 3 wird die Netzspannung U_{N} des Energieversorgungsnetzes 2 gemessen. Dabei werden die Netzspannungen U_{Na}, U_{Nb}, U_{Nc} aller drei Phasen des dreiphasigen Energieversorgungsnetzes 2 kontinuierlich bestimmt und als Eingangsgrößen einer Recheneinheit 1 zugeführt. Die Recheneinheit 1 ermittelt in Abhängigkeit von der gemessenen Netzspannung U_{N} Konditionierstromwerte K, die sich aus errechneten Synchronmaschinen-Statorströmen und Oberschwingungs- sowie Unsymmetriekompensationsströmen zusammensetzen, zur Generierung von

Konditionierströmen I_{Ka}, I_{Kb}, I_{Kc} für alle drei Phasen, die mit Hilfe eines hochdynamischen Wechselrichters 4 mit einem Koppeltransformator 5 oder einer Koppelinduktivität in das Energieversorgungsnetz 2 eingespeist werden. Die Bestandteile Netzspannungsmesseinheit 3, Recheneinheit 1 und Wechselrichter 4 verhalten sich zusammen am Energieversorgungsnetz 2 wie eine konventionelle elektromechanische Synchronmaschine. Die Gleichspannungsseite des Wechselrichters enthält die Quelle bzw. den Speicher 9.

Die Konditionierungseinrichtung hat im Wesentlichen eine Recheneinheit 1, um mit Hilfe eines frei parametrierbaren Modells eine Synchronmaschine nachzubilden und in Abhängigkeit von der gemessenen Netzspannung U_{N} Konditionierstromwerte K zu ermitteln, die sich unter den Bedingungen der eingestellten Parameter bei einer Synchronmaschine ergeben würden. Hierzu hat die Recheneinheit 1 einen Synchronmaschinennachbildungsalgorithmus 6.

Zusätzlich hat die Recheneinheit 1 modulare Funktionseinheiten zur Oberschwingungskompensation 7 und Unsymmetriekompensation 8. Mit Hilfe der Algorithmen zur Synchronmaschinennachbildung und zur Oberschwingungs- und Unsymmetriekompensation wird das Konditionierstromwertesignal K als Netzeinspeisestromsollwertsignal ermittelt, das dem hochdynamischen Wechselrichter 4 zur Einprägung der errechneten Synchronmaschinenstator- und Kompensationsströme I_{KSoll} in das Energieversorgungsnetz 2 zugeführt wird. Durch die freie Festlegung der Parameter der Synchronmaschinennachbildung 6 kann das Verhalten der Synchronmaschine z. B. hinsichtlich Dämpfung und Reaktion nach transienten Vorgängen der jeweiligen Beschaffenheit des angekoppelten Energieversorgungsnetzes 2 bzw. des Verhaltens der Lasten im Energieversorgungsnetz 2 angepasst werden.

Die zur Oberschwingungs- und Unsymmetriekompensation ermittelten Anteile der Konditionierströme I_{O} und I_{U} sind superpositionierbar zu den mit der Synchronmaschinennachbildung ermittelten Anteilen der Konditionierströmen I_{KSoll}.

Durch die vollständige Nachbildung der Synchronmaschine kann die Konditionierungseinrichtung auch in den konventionellen Wirk- und Blindleistungstransfer des Netzverbundes nach P-f-(Wirkleistung-Frequenz) bzw. Q-U-(Blindleistung-Spannung)-Statik einbezogen werden. Durch Absenkung der Netzspannung U_{N} kann kapazitive Blindleistung zur Netzstützung durch Wirkung des Synchronmaschinennachbildungsalgorithmus 6 bezogen werden. Sinkt hingegen die Netzfrequenz als Indikator einer Netzgrenzbelastung, wird selbsttätig Wirkleistung vom Konditioniersystem zum Energieversorgungsnetz 2 übertragen. Befindet sich der Synchronmaschinennachbildungsalgorithmus 6 im freien Maschinenmodus, so findet ein Leistungstransfer nach natürlicher Kennlinie bei Überlagerung einer Primärregelung (geregelter Maschinenmodus) nach linearer P-f-/Q-U-Statik statt. Die erforderliche Leistung wird in einer mit dem Wechselrichter 4 verbundenen Gleichspannungsquelle 9 vorgehalten. Am Energieversorgungsnetz 2 benötigte Wirk- und Blindleistung kann auch lokal an dem Synchronmaschinennachbildungsalgorithmus 6 durch Vorgabe eines virtuellen Polradwinkels bzw. Veränderung der virtuellen Erregung vorgenommen werden. Die im Fall einer Polradwinkelvorgabe dem Netz zu- oder abgeführte elektrische Leistung wird nicht wie bei einer konventionellen elektromechanischen Synchronmaschine der Welle zu- oder abgeführt, sondern dem Gleichspannungsspeicher 9 über den Wechselrichter 4 zu- oder abgeführt.

Die Recheneinheit 1 analysiert zusätzlich Spannungsoberschwingungen und Spannungsunsymmetrien am Energieversorgungsnetz 2 und stellt entsprechende Kompensationsstromwerte K_{O} und K_{U} als Anteil der Konditionierstromwerte K_{Soll} bereit. Diese werden als sekundäre und tertiäre Sollwertströme dem primären Sollwertstrom der Nachbildung der Synchronmaschine bei zeitlicher Staffelung ihrer Wirkung überlagert und als Gesamtsollwert I_{KSoll} dem Wechselrichter 4 zugeführt.

Die Wechselrichtermodulation erfolgt nach einem hochdynamischen Hystereseverfahren, welches das zusammengesetzte Kompensationsstrom-Sollwertsignal K_{Soll} direkt verarbeitet und dieses somit unmittelbar am Energieversorgungsnetz 2 durch Einspeisung wirksam werden lässt.

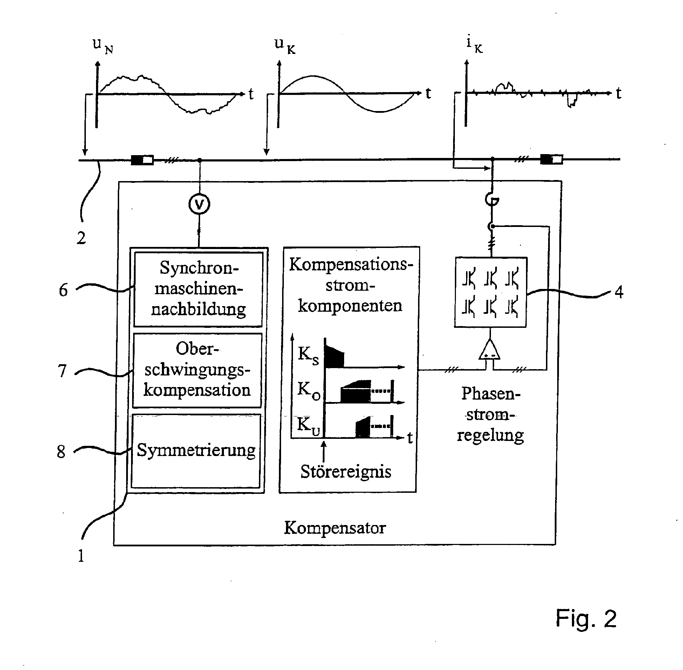

Figur 2 lässt ein Diagramm der Konditionierungseinrichtung mit Netzspannungs- und Kompensationsstromverläufen erkennen. Die beeinträchtigte Netzspannung U_{N} wird gemessen und von der Recheneinheit 1 zugeführt. Über die Zeit werden Konditionierstromwerte K_{S} mit Hilfe der Synchronmaschinennachbildung 6, Oberschwingungs- Kompensationsstromwerte K_{O} zur Oberschwingungskompensation und Unsymmetrie-Kompensationsstromwerte K_{U} zur Symmetrisierung der Netzspannung bereitgestellt. Störereignisse werden über die Zeit in Abhängigkeit von diesen Konditionierstromwerten K kompensiert, indem diese über einen Phasenstromregler und einen hochdynamischen Wechselrichter 4 in den zu konditionierenden Netzbereich eingespeist werden.

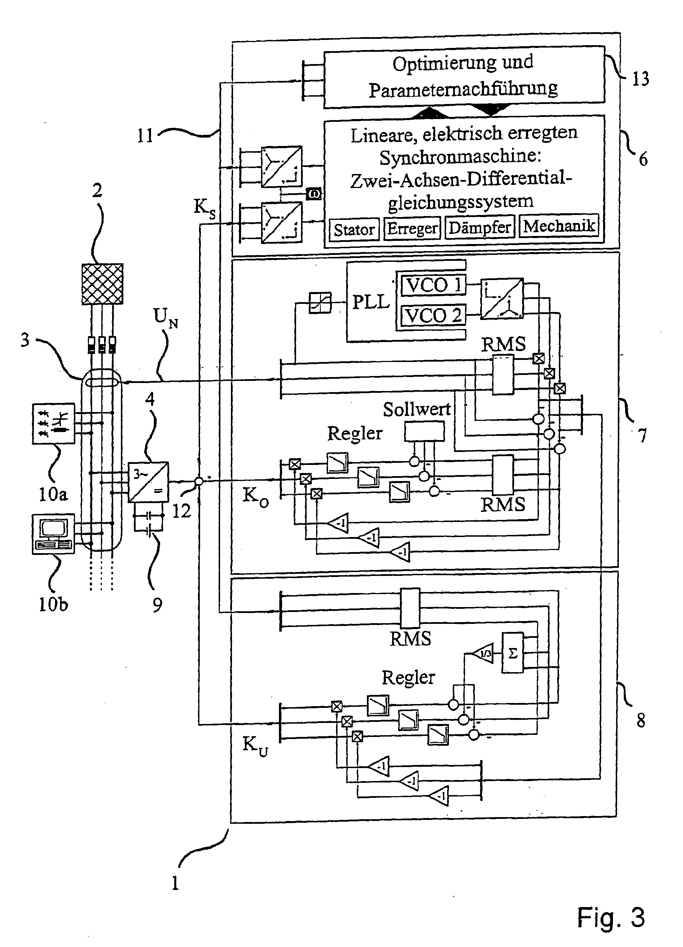

Figur 3 lässt ein Diagramm des Detailaufbaus der Konditionierungseinrichtung erkennen, die an ein belastetes Energieversorgungsnetz 2 angeschlossen ist. In dem Wirkungsbereich der Konditionierungseinrichtung sind beispielhaft netzqualitätsbelastete Verbraucher 10a, 10b angeschlossen. Die Energiequalität des Energieversorgungsnetzes 2 wird im Wirkungsbereich der Konditioniereinrichtung dadurch verbessert, dass die errechneten Konditionierstromwerte K als entsprechende Konditionierströme I_{K} über den Wechselrichter 4 in das Energieversorgungsnetz 2 eingespeist werden.

Die Komponente zur Synchronmaschinennachbildung 6 beinhaltet eine HinTransformation der von der Synchronmaschinennachbildung folgend als Statorspannung interpretierten Netzspannung 11, um aus der gemessenen dreiphasigen Netzspannung U_{N} die Statorströme einer virtuellen elektromechanischen Synchronmaschine mit elektrischer Erregung und Dämpferkäfig mit Hilfe eines Modells zu berechnen. Die dreiphasige Netzspannung U_{N} wird weiterhin einer Einheit 11 zur Netzbeobachtung zugeführt, um mit Hilfe von Optimierungsalgorithmen und einer Maschinenparameternachführung die aktuelle Netzbelastungssituation zu berücksichtigen. Hierzu werden die frei festlegbaren Linearfaktoren des Differentialgleichungssystems der Synchronmaschine fortwährend im Zeitschritt einiger Minuten angepasst. Das Differentialgleichungssystem der Synchronmaschinennachbildung beschreibt ein Zwei-Achsen-Modell der magnetisch linearen, elektrisch erregten Synchronmaschine

und berücksichtigt alle elektrischen und magnetischen Größen des Stators, Erregers und des Dämpfers in der Darstellung im d-q-Koordinatensystem. Neben der frei parametrierbaren Impedanzen des Stators, Erregers und Dämpfers einschließlich der Flusskopplungs-Matrix enthält das Modell ein ebenso konfigurierbares mechanisches System zur Nachbildung der rotierenden Masse des Maschinenrotors sowie die erforderlichen Transformationen zur Darstellung der Netzspannung in d-q-Form bzw. zur Rückführung der vom Zwei-Achsen-Modell errechneten d-q-Statorströme in dreiphasige Statorströme zur Übergabe der Maschinenstatorstromwerte an den Wechselrichter 4 für die Einspeisung in das Energieversorgungsnetz 2.

Weiterhin ist zu erkennen, dass der Algorithmus zur Oberschwingungskompensation 7 und der Algorithmus zur Unsymmetriekompensation 8 jeweils in Abhängigkeit von den gemessenen dreiphasigen Netzspannungen U_{N} die Kompensations*-stromwertesignale K_{O}(t) und K_{U}(t) über die Zeit t erzeugen, die in einem Addierer 12 einander mit dem errechneten Maschinenstatorstromsignal der Maschinennachbildung überlagert werden, um ein resultierendes Konditionierstromsignal K(t) über die Zeit t zu erzeugen, das dem Wechselrichter 4 zur Erzeugung eines Gesamtkonditionierstromverlaufs I_{K}(t) als Sollwert zugeführt wird.

(*K_{S}: Stromsignal der Synchronmaschinennachbildung (Maschinenstrom), K_{O}: Stromsignal der Oberschwingungskompensationseinrichtung (Oberschwingungskompensationsstrom), K_{U}: Stromsignal der Unsymmetriekompensationseinrichtung (Unsymmetriekompensationsstrom) **Maschinenstrom** + Oberschwingungs**kompensations**strom + Unsymmetrie**kompensations**strom = **Konditionier**strom)

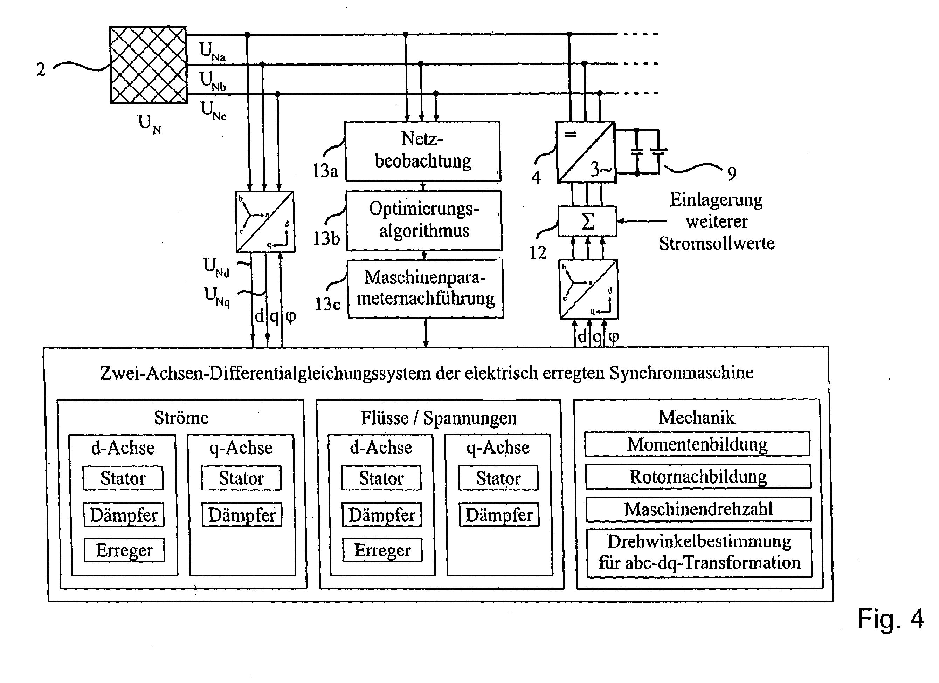

Figur 4 lässt ein Blockdiagramm des Detailaufbaus des Algorithmus zur Synchronmaschinennachbildung 6 erkennen. Der Algorithmus enthält ein auf der Recheneinheit echtzeitig ausgeführtes Differentialgleichungssystem zur Beschreibung des Verhaltens einer Synchronmaschine anhand eines Zwei-Achsen-Modells. Aus der Netzspannung U_{N} werden die Statorströme in d-q-Koordinaten

einer virtuellen elektromechanischen Synchronmaschine mit elektrischer Erregung und Dämpferkäfig berechnet. Das Zwei-Achsen-Modell der Synchronmaschine enthält alle Impedanzen und Flussverkettungen des Stators, Erregers und des Dämpfers einer solchen Maschine und bestimmt alle ihre elektrischen, magnetischen und mechanischen Größen echtzeitig.

Neben den frei parametrierbaren Linearfaktoren des Differentialgleichungssystem beinhaltet das Modell ein ebenso parametrierbares mechanisches System zur Nachbildung der rotierenden Masse des Maschinenrotors sowie die erforderlichen Transformationen zur Darstellung der Netzspannung in d-q-Form bzw. zur Rückführung der vom Zwei-Achsen-Modell errechneten d-q-Statorströme in dreiphasige Statorströme zur Sollwertübergabe an den Wechselrichter 4 für die Einspeisung in das Energieversorgungsnetz 2.

Die Recheneinheit 1 verarbeitet die aus den drei Phasen U_{Na}, U_{Nb} und U_{Nc} bestehende Netzspannung U_{N} in einem der elektromechanischen Synchronmaschine entsprechenden Differentialgleichungssystem. Hierzu erfolgt zunächst eine HinTransformation der Statorspannung U_{N} in die Komponenten U_{Nd} und U_{Nq} unter Zuhilfenahme des Transformationswinkels ϕ, welcher aus der im Differentialgleichungssystem errechneten Rotation des virtuellen Rotors abgeleitet wird.

Mit Hilfe des Differentialgleichungssystems werden aus der Netzspannung in d-q-Koordinaten die Maschinenstatorströme in d-q-Koordinaten berechnet, wobei die für die elektromechanische Synchronmaschine typischen magnetischen Kopplungen der Impedanzen in Stator, Erreger und Dämpfer berücksichtigt werden. Auf der d-Achse sind Stator, Erreger und Dämpfer miteinander magnetische verkoppelt. Da die Erregung nur auf der d-Achse wirkt, sind auf der q-Achse nur Stator und Dämpfer miteinander verkoppelt. Die d- und q-Achse untereinander sind aufgrund ihrer Orthogonalität magnetisch entkoppelt.

Um die errechneten Statorströme über den Wechselrichter in das Energieversorgungsnetz 2 einspeisen zu können, müssen sie zuvor aus der d-q-

Darstellung in abc-Darstellung zurücktransformiert werden. Dies geschieht abermals unter Zuhilfenahme des Transformationswinkels ϕ.

Das Differentialgleichungssystem der Synchronmaschine berücksichtigt weiterhin die Momentenbildung, die Rotornachbildung, die Maschinendrehzahl und die Drehwinkelbestimmung für die Koordinatentransformation der elektrischen Maschinengrößen.

Die Netzbelastungssituation wird mit Hilfe einer Einheit 13 zur Netzbeobachtung 13a zur Optimierung 13b und zur Maschinenparameternachführung 13c berücksichtigt. Hierzu wird die Netzspannung U_{N} am Netzanschlusspunkt der Konditionierungseinrichtung bewertet und es wird während des Betriebs eine Änderung der Parametrierung der Nachbildung der Synchronmaschine mit dem Ziel der optimalen Dämpfung von Schwingungen am Energieversorgungsnetz 2 bzw. zur optimalen Reaktion der Nachbildung der Synchronmaschine auf stoßartige Netzbelastung zur Erhöhung der transienten Kurzschlussleistung des Energieversorgungsnetzes 2 vorgenommen. Durch eine fortwährende Anpassung der Parameter der Nachbildung der Synchronmaschine kann zusätzlich auf Veränderungen der Netzkennwerte in Folge von Umschaltvorgängen oder dem Einfluss dominierender Lasten reagiert werden. Über die Elemente der Flusskopplungsmatrix sowie der d-q-Impedanzen der Stator-, Erreger- und Dämpferkreise der Synchronmaschinennachbildung lassen sich die transiente d-Reaktanz sowie die subtransiente d- und q-Reaktanz und damit verschiedene Abklingzeitkonstanten im Statorstrom nach einer Reaktion der Synchronmaschinennachbildung auf stoßartige Netzbelastungen einstellen. Zusätzlich ist das mechanische System der Synchronmaschinennachbildung frei parametrierbar, so dass mit dem Masseträgheitsmoment des Rotors die mechanische Eigenfrequenz der virtuellen Maschine verändert werden kann.

Durch die Unterstützung des Wirk- bzw. Blindleistungsfemabrufs durch das Energieversorgungsnetz mittels P-f bzw. U-Q-Statik ist die Konditionierungseinrichtung in der Lage, konventionelle Synchrongeneratoren zu substituieren. P-f bzw. U-Q-Statiken sind Kennlinien, die eine Abhängigkeit der

Wirkleistung P von der Frequenz f bzw. der Blindleistung Q von der Spannung U beschreiben. Es ist zudem denkbar, dass dem Synchronmaschinenmodell weiterhin Regler zur Realisierung einer Primärregelung überlagert werden, so dass die Konditionierungseinrichtung bei Leistungsfernabruf wahlweise mit natürlicher oder linearisierter Kennlinie wirkt.

Eine solche mögliche Primärregelung ergibt zusammen mit den Dämpfereigenschaften eine positive von den konventionellen Kraftwerken bekannte Netzbeeinflussung im Kleinen, deren Wirkung sich bei räumlicher Verteilung einer entsprechenden Anzahl von Konditionierungseinrichtungen mit nachgebildeten Synchronmaschinen netzweit erstreckt.

Mit Hilfe des Optimierungsalgorithmus 13b kann durch Analyse des Netzverhaltens am Koppelpunkt und mit der Bestimmung von Maschinenmodellparametern einer Schwingenneigung oder Spannungseinbrüchen entgegengewirkt werden.

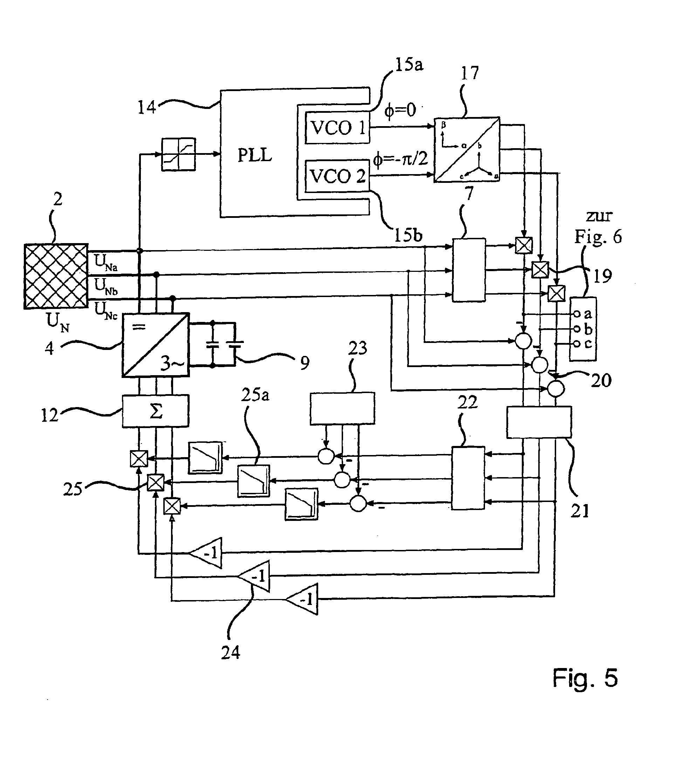

Figur 5 lässt ein Blockdiagramm der Funktionseinheit zur Oberspannungskompensation 7 der Konditionierungseinrichtung erkennen. In Abhängigkeit von der dreiphasigen Netzspannung U_{N} (U_{Na}, U_{Nb}, U_{Nc}) wird ein Oberspannungs-Kompensationssollwertsignal K_{O} zur Generierung eines entsprechenden Anteils des Konditionierstroms I_{K} im Wechselrichter 4 erzeugt.

Eine Phase der Netzspannung wird einem Phasenregelkreis (PLL) 14 mit zwei nachgeführten spannungsgesteuerten Oszillatoren 15a, 15b zugeführt, um den Winkelbezug zur Phase 1 der Netzspannung U_{N} herzustellen. Durch die Nachführung der beiden zusätzlichen spannungsgesteuerten Oszillatoren (VCO₁, VCO₂) 15a, 15b, die gegeneinander eine Grundwinkelverschiebung von Φ = -π/2 aufweisen, wird ein orthogonales α-β-System gebildet. Durch nachfolgende α-β zu a-b-c-Transformation 17 wird ein zur Netzspannung U_{N} phasenrichtiges, normiertes Dreiphasen-Hilfssystem zur Verfügung gestellt, welches durch eine Effektivwertfunktion 7 in der Amplitude der Netzspannung U_{N} nachgeführt wird. Mit der Effektivwertfunktion 7 wird der gleitende Netzspannungseffektivwert phasenseparat gebildet und mit

Multiplizierern das zuvor mit dem Phasenregelkreis PLL erzeugte Dreiphasen-Hilfssystem amplitudenbewertet.

Zur Bestimmung der phasenseparaten Verzerrungsanteile der Netzspannung wird das hinter den Multiplikatoren 19 abgreifbare amplituden- und phasenrichtige Hilfssignal von den Netzspannungs-Momentansignalen durch Differenzbildung 20 abgezogen. Hinter den Differenzstellen 20 sind die Signale, die die Verzerrungsnateile in der Netzspannung darstellen, abgreifbar.

Nach Ausfilterung grundfrequenter Anteile durch einen Filter 21 werden mit einer Effektivwertfunktion 22 der gleitende Effektivwert des Verzerrungsanteils jeder Phase der Netzspannung ermittelt. Diese Ist-Verzerrungssignale werden den Verzerrungs- bzw. Distorsionsreglern 25a zugeführt, wobei die Regelung phasenseparat vorgenommen wird.

Die hochpassgefilterten Signale werden in den Phaseninvertern 24 jeweils phasenseparat invertiert. Die durch die Phaseninvertierung gewonnenen Kompensationssignale werden über Multiplizierer 25 einer Stromüberlagerungseinrichtung 12, die die Stromsollwerte der Maschinennachbildung und der Unsymmetriekompensation einbezieht, zugeführt. Zuvor wird das hinter den Phaseninvertern 24 anstehende Oberschwingungskompensationssignal durch die Multiplikationen 25 vom Ausgangssignal der Verzerrungsregler 25a amplitudenbewertet. Durch die Amplitudenbewertung der Verzerrungsregler 25a werden die hinter den Phaseninvertern 24 anstehenden Kompensationssignale soweit verstärkt oder gedämpft, bis der durch den Sollwertblock 23 vorgegebene Verzerrungsrestwert der Netzspannung eingeregelt ist.

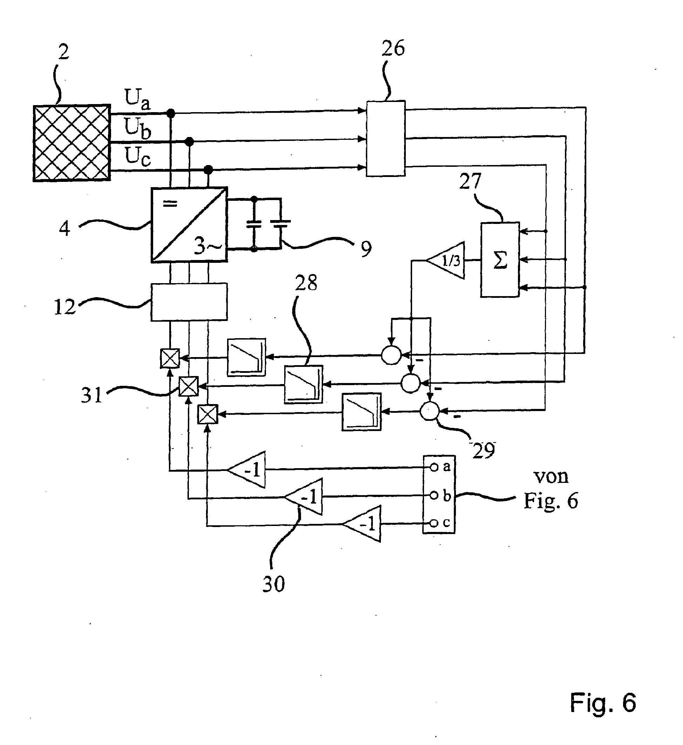

Das in Figur 5 hinter den Multiplikatoren 19 abgreifbare, zur Netzspannung amplituden- und phasenrichtige Hilfssignal wird der Unsymmetriekompensationsstufe in Figur 6 zur Mitverwendung weitergeleitet.

Figur 6 lässt ein Blockdiagramm der Funktionseinheit zur Unsymmetriekompensation 8 erkennen. Nach phasenseparater Bestimmung des gleitenden

Netzspannungseffektivwertes mit einer Effektivwertfunktionseinheit 26 wird mit einer Mittelwerteinheit 27 das arithmetische Mittel der Netzspannungseffektivwerte bestimmt. Das Maß der Unsymmetrie wird folgend als Differenz aus dem gemeinsamen Netzspannungsmittelwert und der ermittelten gleitenden Netzspannungseffektivwerte für jede Phase errechnet und jeweils einem Unsymmetrieregler 28 zugeführt. Für die Differenzbildung sind Subtrahierer 29 vorgesehen.

Das in der Einrichtung zur Oberschwingungskompensation 7 gewonnene, zur Netzspannung amplituden- und phasenrichtige Hilfssignal in a-b-c-Koordinatensystem wird als Kompensationssignal zur Wiederherstellung der Symmetrie eingesetzt. Hierzu erfolgt eine Phaseninvertierung dieser Signale mit jeweils einem Phaseninverter 31 pro Phase. Dieses phaseninvertierte Hilfssignal wird phasenseparat mit dem jeweiligen Ausgang des Unsymmetriereglers 28 durch Multiplizierer 31 amplitudenbewertet.

Das Unsymmetriekompensationssignal steht somit entsprechend stellgrößenproportional als Bestandteil des Sollwertes des Wechselrichters 4 zur Verfügung und wird den weiteren Stromsollwertsignalen zur Oberwellenkompensation und zur Synchronmaschinennachbildung superpositioniert.

Die Superposition der Stromsollwertsignale der drei Funkitionseinheiten des Konditionierers ist möglich, da Änderungen im Eingriff der Oberschwingungs- und Unsymmetrie-Kompensationsfunktionenen nach Eintritt einer Störung in Gestalt der Abweichung des Netzspannungsverlaufs von der idealen Sinusform nach Verlauf unterschiedlicher Zeitspannen erfolgt. Das erste Zeitfenster im Bereich von Null bis einigen 100 Millisekunden in Abhängigkeit von der Parametrierung bleibt der Einwirkung der Synchronmaschinennachbildung vorbehalten. Auf diese Weise werden transiente und subtransiente Reaktionen der Synchronmaschinennachbildung sofort am Netz wirksam. Infolge der verzögerten Wirkung der Effektivwertmessstellen in den Oberschwingungs- und Unsymmetrie-Kompensationsfunktionen erfolgt der Reglereingriff dieser Teilsysteme nach Eintritt

einer Störung des Netzspannungsverlaufs bzw. einer Unsymmetrie zeitversetzt nach der Reaktion der Synchronmaschinennachbildung.

## Patentansprüche

1. Konditionierungseinrichtung für Energieversorgungsnetze (2) mit einer an ein dreiphasiges Energieversorgungsnetz (2) anschließbaren Netzspannungsmesseinheit (3), einer an die Netzspannungsmesseinheit (3) angeschlossenen Recheneinheit (1) zur Ermittlung von Konditionierstromwerten (K) und einer mit dem Energieversorgungsnetz (2) verbundenen Wechselrichtereinheit, die zur Einspeisung von Konditionierströmen (I_{K}) in Abhängigkeit von den ermittelten Konditionierstromwerten (K) eingerichtet ist, **dadurch gekennzeichnet, dass**
- die Recheneinheit (1) zur modellierten Nachbildung einer Synchronmaschine mit einem Differentialgleichungssystem eingerichtet ist, das das Verhalten einer Synchronmaschine beschreibt und parametrierbare Linearfaktoren zur änderbaren Einstellung der Synchronmaschinenparameter hat,
- sowie zur Bewertung der Netzspannung (U_{N}) des Energieversorgungsnetzes (2) am Netzanschlusspunkt der Konditionierungseinrichtung eingerichtet ist
- und weiterhin zur Anpassung von Linearfaktoren des Differentialgleichungssystems eingerichtet ist, derart, dass durch das hierdurch angepasste Verhalten der nachgebildeten Synchronmaschine Schwingungen und/oder Spannungseinbrüchen am Energieversorgungsnetz (2) entgegengewirkt wird,
- wobei die Recheneinheit (1) mit den gemessenen Netzspannungen (U_{N}) des Energieversorgungsnetzes (2) als Eingangsgrößen in Abhängigkeit der anpassbaren Synchronmaschinenparameter mindestens einen Anteil (K_{S}) der Konditionierstromwerte (K), die sich unter den Bedingungen der eingestellten Synchronmaschinenparameter als Statorströme (I_{S}) der nachgebildeten Synchronmaschine ergeben, bereitstellt,
- und dass die Konditionierungseinrichtung zur Erzeugung eines resultierenden Konditionierstromsignals (K(t)) über die Zeit t in Abhängigkeit von den berechneten Statorströmen (I_{S}) eingerichtet ist, wobei das resultierende Konditionierstromsignal (K(t)) der Wechselrichtereinheit als Sollwert zur Erzeugung eines Gesamtkonditionierungsverlaufs (I_{K}(t)) und Einspeisung als Konditionierstrom (I_{K}) in das Energieversorgungsnetz (2) zugeführt wird.

2. Konditionierungseinrichtung nach Anspruch 1, **dadurch gekennzeichnet, dass** die Recheneinheit (1) zur Nachbildung der einen Stator, einen Erreger und einen Dämpfer aufweisenden magnetisch linearen und elektrisch erregten Synchronmaschine mit Hilfe eines vollständigen Differentialgleichungssys-tems einschließlich einer parametrierbaren Matrix der linearen Faktoren des Differentialgleichungssystems zur Beschreibung der Impedanzen von Stator; Erreger und Dämpfer und der Flusskopplung zwischen Stator, Erreger und Dämpfer der simulierten Synchronmaschine eingerichtet ist.

3. Konditionierungseinrichtung nach Anspruch 1 oder 2, **dadurch gekennzeichnet, dass** die zur Nachbildung der Synchronmaschine mit Hilfe des Synchronmaschinenmodells eingerichtete Recheneinheit (1) auch das mechanische System berücksichtigt und zur Nachbildung der rotierenden Masse des Rotors der simulierten Synchronmaschine eingerichtet ist.

4. Konditionierungseinrichtung nach einem der vorhergehenden Ansprüche, **dadurch gekennzeichnet, dass** die Recheneinheit (1) zur Ermittlung von Netzspannungsoberschwingungen der gemessenen Netzspannung und Generierung von Oberschwingungs-Kompensationsstromwerten (K_{O}) als Anteil der Konditionierstromwerte (K) zur Kompensation der ermittelten Spannungsoberschwingungen bei Rückspeisung von den Oberschwingungs-Kompensationsstromwerten (K_{O}) entsprechenden Kompensationsströmen (I_{K}) in das Energieversorgungsnetz (2) eingerichtet ist.

5. Konditionierungseinrichtung nach einem der vorhergehenden Ansprüche, **dadurch gekennzeichnet, dass** die Recheneinheit (1) zur Ermittlung von Netzspannungsunsymmetrien der gemessenen Netzspannung (U_{N}) und Generierung von Unsymmetrie-Kompensationsstromwerten (K_{U}) als Anteil der Konditionierstromwerte (K) zur Kompensation der ermittelten Netzspannungsunsymmetrien bei Rückspeisung von den Unsymmetrie-Kompensationsstromwerten (K_{U}) entsprechenden Kompensationsströmen (I_{K}) in das Energieversorgungsnetz (2) eingerichtet ist.

6. Konditionierungseinrichtung nach einem der vorhergehenden Ansprüche, **gekennzeichnet durch** einen über eine Koppelinduktivität oder einen Koppeltransformator (5) an das Energieversorgungsnetz (2) angeschlossenen Wechselrichter (4) und eine mit dem Wechselrichter (4) verbundene Gleichspannungsquelle (9), wobei der Wechselrichter (4) **durch** die Konditionierstromwerte (K) angesteuert ist, um eine Energiekonditionierung im Energieversorgungsnetz (2) durchzuführen.

## Claims

1. A conditioning device for power supply networks (2) having a network voltage measurement unit (3) which can be connected to a three-phase power supply network (2), having a computation unit (1) which is connected to the network voltage measurement unit (3) and is used to determine conditioning current values (K) and having an inverter unit which is connected to the power supply network (2) and is used to feed in conditioning currents (I_{K}) as a function of the determined conditioning current values (K), **characterized in that** the computation unit (1) is designed for modeled simulation of a synchronous machine with a differential equation system which describes the behavior of a synchronous machine and which comprises configurable linear factors for adjustable setting synchronous machine parameters,
- as well as for assessing the network voltage (M_{N}) of the power supply network (2) at the network connection point of the conditioning device
- and furthermore for adaption of the linear factors of the differential equation system, such, that by the hereby adapted behavior of the simulated synchronous machine oscillation tendencies and/or voltage dips at the power supply network (2) is counteracted,
- wherein the computation unit (1) provides by, using the measured network voltages unit (U_{N}) of the power supply network (2) as input variables at least one component (K_{S}) of the conditioning current values (K) which results under the conditions of the configured synchronous machine parameters as stator currents (I_{S}) of the simulated synchronous machine as a function of the configured synchronous machine parameters,
- and that the conditioning device is designed for producing a resultant conditioning current signal (K(t)) over time t as a function of the calculated stator currents (I_{S}), wherein the resultant conditioning current signal (K(t)) is supplied as a set value to the inverter unit in oder to produce an overall conditioning current profile (I_{K}(t)) and to feed in as conditioning currents (I_{K}) into the power supply network (2).

2. The conditioning device as claimed in claim 1, **characterized in that** the computation unit (1) is designed to simulate the magnetically linear and electrically excited synchronous machine, which has a stator, an exciter and a damper, with the aid of a complete differential equation system including a configurable matrix of the linear factors of the differential equation system in order to describe the impedances of the stator; exciter and damper and the flux coupling between the stator, exciter and damper of the simulated synchronous machine.

3. The conditioning device as claimed in claim 1 or 2, **characterized in that** the computation unit (1), which is designed to simulate the synchronous machine with the aid of the synchronous machine model, also takes account of the mechanical system and is designed to simulate the rotating mass of the rotor of the simulated synchronous machine.

4. The conditioning device as claimed in one of the preceding claims, **characterized in that** the computation unit (1) is designed to determine network voltage harmonics of the measured network voltage and to generate harmonic compensation current values (K_{O}) as a component of the conditioning current values (K) for compensation of the determined voltage harmonics, with compensation currents (I_{K}), which correspond to the harmonic compensation current values (K_{O}), being fed back into the power supply network (2).

5. The conditioning device as claimed in one of the preceding claims, **characterized in that** the computation unit (1) is designed to determine network voltage unbalances of the measured network voltage (U_{N}) and to generate unbalance compensation current values (K_{U}) as a component of the conditioning current values (K) in order to compensate for the determined network voltage unbalances, with compensation currents (I_{K}) which correspond to the unbalance compensation current values (K_{U}) being fed back into the power supply network (2).

6. Conditioning device as claimed in one of the preceding claims, **characterized by** an inverter (4) which is connected to the power supply network (2) via a coupling inductance or a coupling transformer (5), and a DC voltage source (9) which is connected to the inverter (4), with the inverter (4) being driven by the conditioning current values (K) in order to carry out power conditioning in the power supply network (2).

## Revendications

1. Dispositif de conditionnement pour réseaux de distribution d'énergie (2) comprenant une unité de mesure de la tension de réseau (3) pouvant être raccordée à un réseau de distribution d'énergie (2) triphasé, une unité de calcul (1) raccordée à l'unité de mesure de la tension de réseau (3) pour déterminer des valeurs de courant de conditionnement (K) et une unité onduleur reliée avec le réseau de distribution d'énergie (2), laquelle est configurée pour injecter des courants de conditionnement (I_{K}) en fonction des valeurs de courant de conditionnement (K) déterminées, **caractérisé en ce que**
- l'unité de calcul (1) est configurée avec un système d'équation différentielle pour la simulation modélisée d'une machine synchrone, lequel décrit le comportement d'une machine synchrone et possède des facteurs linéaires paramétrables pour le réglage modifiable des paramètres de la machine synchrone,
- et aussi configurée pour l'évaluation de la tension de réseau (U_{N}) du réseau de distribution d'énergie (2) au point de raccordement au réseau du dispositif de conditionnement
- et en outre configurée pour l'adaptation des facteurs linéaires du système d'équation différentielle de telle sorte que le comportement ainsi adapté de la machine synchrone simulée permet de contrer les oscillations et/ou les chutes de tension sur le réseau de distribution d'énergie (2),
- l'unité de calcul (1) délivrant, avec les tensions de réseau (U_{N}) mesurées du réseau de distribution d'énergie (2), en tant que grandeurs d'entrée en fonction des paramètres adaptables de la machine synchrone, au moins une part (K_{S}) des valeurs de courant de conditionnement (K) qui sont obtenues sous les conditions des paramètres réglés de la machine synchrone en tant que courants de stator (I_{S}) de la machine synchrone simulée,
- et **en ce que** le dispositif de conditionnement est configuré pour générer un signal de courant de conditionnement résultant (K(t)) sur le temps t en fonction des courants de stator (I_{S}) calculés, le signal de courant de conditionnement résultant (K(t)) de l'unité onduleur étant acheminé en tant que valeur de consigne pour la génération d'une courbe de conditionnement totale (I_{K}(t)) et l'injection en tant que courant de conditionnement (I_{K}) dans le réseau de distribution d'énergie (2).

2. Dispositif de conditionnement selon la revendication 1, **caractérisé en ce que** l'unité de calcul (1) est configurée pour à simulation de la machine synchrone magnétiquement alinéaire et excitée électriquement, présentant un stator, un excitateur et un amortisseur, à l'aide d'un système d'équation différentielle complet, y compris une matrice paramétrable des facteurs linéaires du système d'équation différentielle pour la description des impédances du stator, de l'excitateur et de l'amortisseur et du couplage des flux entre le stator, l'excitateur et l'amortisseur de la machine synchrone simulée.

3. Dispositif de conditionnement selon la revendication 1 ou 2, **caractérisé en ce que** l'unité de calcul (1) configurée pour la simulation de la machine synchrone à l'aide du modèle de machine synchrone tient également compte du système mécanique et elle est configurée pour simuler la masse en rotation du rotor de la machine synchrone simulée.

4. Dispositif de conditionnement selon l'une des revendications précédentes, **caractérisé en ce que** l'unité de calcul (1) est configurée pour la détermination des harmoniques de tension de réseau de la tension de réseau mesurée et la génération de valeurs de courant de compensation d'harmonique (K_{O}) en tant que part des valeurs de courant de conditionnement (K) pour compenser les harmoniques de tension déterminées lors de la réinjection des courants de compensation (I_{K}) correspondant aux valeurs de courant de compensation d'harmonique (K_{O}) dans le réseau de distribution d'énergie (2).

5. Dispositif de conditionnement selon l'une des revendications précédentes, **caractérisé en ce que** l'unité de calcul (1) est configurée pour la détermination des dissymétries de tension de réseau de la tension de réseau (U_{N}) mesurée et la génération de valeurs de courant de compensation de dissymétrie (K_{U}) en tant que part des valeurs de courant de conditionnement (K) pour compenser les dissymétries de tension de réseau déterminées lors de la réinjection des courants de compensation (I_{K}) correspondant aux valeurs de courant de compensation de dissymétrie (K_{U}) dans le réseau de distribution d'énergie (2).

6. Dispositif de conditionnement selon l'une des revendications précédentes, **caractérisé par** un onduleur (4) raccordé au réseau de distribution d'énergie (2) par le biais d'une inductance de couplage ou d'un transformateur de couplage (5) et une source de tension continue (9) reliée à l'onduleur (4), l'onduleur (4) étant commandé par les valeurs de courant de conditionnement (K) afin d'effectuer un conditionnement d'énergie dans le réseau de distribution d'énergie (2).
